Europäisches Patentamt

European Patent Office

Office européen des brevets

(11) Veröffentlichungsnummer: **0 208 351**
A1

# (12) EUROPÄISCHE PATENTANMELDUNG

(21) Anmeldenummer: 86200981.8

(22) Anmeldetag: 05.06.86

(51) Int. Cl.⁴: **H 04 N 9/83**
**H 04 N 9/89**

(30) Priorität: 07.06.85 DE 3520321

(43) Veröffentlichungstag der Anmeldung:
14.01.87 Patentblatt 87/3

(84) Benannte Vertragsstaaten:
AT DE FR GB

(71) Anmelder: Philips Patentverwaltung GmbH
Billstrasse 80
D-2000 Hamburg 28(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB AT

(72) Erfinder: Wölber, Jörg
Taubenstrasse 32
D-2080 Pinneberg(DE)

(74) Vertreter: Hartmann, Heinrich, Dipl.-Ing. et al,
Philips Patentverwaltung GmbH Billstrasse 80 Postfach
10 51 49
D-2000 Hamburg 28(DE)

(54) Schaltungsanordnung für einen Videorecorder.

(57) Schaltungsanordnung für einen Videorecorder mit einem Modulator (5) zur Modulation eines Farbartsignals von einem ersten auf einen zweiten Träger mittels eines dritten Trägers. Zur Erzeugung des dritten Trägers ist ein erster Mischer (39) mit einem Referenzoszillator (18) und einem ersten spannungsgesteuerten Oszillator (23) gekoppelt. Dem ersten spannungsgesteuerten Oszillator (23) wird ein Steuersignal von einer Phasenvergleichsschaltung (15), die die Frequenz und Phase des Farbsynchronsignals mit dem ersten Oszillatorsignal vergleicht, und ein Steuersignal von einer Phasenvergleichsschaltung (30) eines Phasenregelkreises, in dem ein zweiter spannungsgesteuerte Oszillator (27) mit den Zeilensynchronimpulsen synchronisiert wird, zugeführt. Die beiden spannungsgesteuerten Oszillatoren sind annähernd identisch aufgebaut und haben ein festes Frequenzverhältnis zueinander.

EP 0 208 351 A1

Croydon Printing Company Ltd.

./...

Schaltungsanordnung für einen Videorecorder

Die Erfindung betrifft eine Schaltungsanordnung für einen Videorecorder mit einem Modulator zur Modulation eines Farbartsignals von einem ersten auf einen zweiten Träger mittels eines dritten Trägers, mit einem ersten Phasenregelkreis, in dem eine erste Phasenvergleichsschaltung entsprechend dem Phasenvergleich zwischen dem Farbsynchronsignal und einem in einem Referenzoszillator erzeugten Oszillatorsignal einen ersten spannungsgesteuerten Oszillator steuert, der mit dem Eingang eines den dritten Träger liefernden ersten Mischer gekoppelt ist, und mit einem zweiten Phasenregelkreis, der einen zweiten spannungsgesteuerten Oszillator und eine zweite Phasenvergleichsschaltung umfaßt, zur Synchronisation des im zweiten spannungsgesteuerten Oszillator erzeugten frequenzgeteilten Oszillatorsignals mit den wiedergewonnenen Synchronimpulsen.

Bei den heute üblichen Videorecordersystemen wird bei der Aufzeichnung das vom FBAS-Signal abgetrennte, bandbegrenzte Helligkeitssignal frequenzmoduliert in einen höheren Frequenzbereich von z.B. 3 bis 5 MHz gelegt. Der andere Signalanteil des FBAS-Signals, das Farbartsignal, wird vom Farbträger mit einer Frequenz von z.B. 4,43 MHz auf einen Träger mit einer niedrigeren Frequenz von z.B. 627 kHz moduliert. Bei der Wiedergabe wird das Farbartsignal in den höheren Frequenzbereich zurückgesetzt, was mit Hilfe der oben genannten Schaltungsanordnung, die aus den Serviceunterlagen zum Philips-Videorecorder VR 6460 bekannt ist, realisiert wird. Dabei wird diese Modulation mit Hilfe eines dritten Trägers mit einer Frequenz von z.B. 5,06 MHz vorgenommen, die in einem ersten Mischer aus den Oszillatorsignalen des ersten spannungsgesteuerten (Quarz-)Oszillators und des zweiten spannungsgesteuerten (RC-)Oszillators gebildet wird.

Das im zweiten spannungsgesteuerten Oszillator erzeugte Oszillatorsignal wird im zweiten Phasenregelkreis mit den Zeilensynchronimpulsen, die vom Helligkeitssignal vorher abgetrennt worden sind, synchronisiert. Mit Hilfe des zweiten Phasenregelkreises werden Geschwindigkeitsänderungen der Köpfe, die Frequenzänderungen hervorrufen, eliminiert.

Die Frequenz und Phase des ersten spannungsgesteuerten Oszillators wird durch den Phasenvergleich zwischen dem ersten Oszillatorsignal eines Referenzoszillators und dem Farbsynchronsignal bestimmt. In diesem ersten Phasenregelkreis ist ein spannungsgesteuerter Quarz-Oszillator notwendig, um ein Einschwingen auf einer Frequenznebenlinie der Farbträgerfrequenz zu vermeiden, wie dies z.B. bei RC-Oszillatoren vorkommt, die einen größeren verstimmbaren Frequenzbereich haben. Da ein Quarz-Oszillator in geringerem Maße verstimmbar ist, werden Phasenänderungen des Farbsynchronsignals langsam ausgeregelt. Außerdem müssen bei einer Realisierung dieser Schaltungsanordnung als integrierte Schaltungsanordnung zwei Quarze extern angeschlossen werden, da der erste spannungsgesteuerte Oszillator und der Referenzoszillator jeweils mit einem Quarz betrieben werden.

Der Erfindung liegt die Aufgabe zugrunde, eine Schaltungsanordnung der eingangs genannten Art so auszubilden, daß eine schnelle Regelung bei Phasenänderungen erfolgt, ohne daß ein Einschwingen auf einer Frequenznebenlinie ent-steht.

Diese Aufgabe wird erfindungsgemäß dadurch gelöst, daß die beiden spannungsgesteuerten Oszillatoren ein festes Frequenzverhältnis zueinander haben, daß der erste spannungsgesteuerte Oszillator als Steuergröße die Summe der Ausgangssignale der Phasenvergleichsschaltungen erhält, daß der erste spannungsgesteuerte Oszillator über einen Frequenzteiler mit dem ersten Mischer und der Referenzoszillator mit dem anderen Eingang des ersten Mischers gekoppelt ist und daß die Ausgänge der beiden spannungsgesteuerten Oszillatoren mit Eingängen eines zweiten vor dem Frequenzteiler angeordneten Mischers gekoppelt sind.

In der erfindungsgemäßen Schaltungsanordnung wird im zweiten Phasenregelkreis das Oszillatorsignal des zweiten spannungsgesteuerten Oszillators durch ein Steuersignal der zweiten Phasenvergleichsschaltung mit der Zeilenfrequenz synchronisiert. Der erste spannungsgesteuerte Oszillator hat eine auf Grund von Bauelementestreuungen nur wenig vom zweiten spannungsgesteuerten Oszillator abweichende Freilauffrequenz und wird mit Hilfe des Steuersignals der ersten Phasenvergleichsschaltung in die Nähe der Frequenz des ersten spannungsgesteuerten Oszillators gezogen. Die erste Phasenvergleichsschaltung steuert den ersten spannungsgesteuerten Oszillator in Frequenz und Phase so, daß er Phasenänderungen zwischen Farbsynchronsignal und erstem Oszillatorsignal ausregeln kann. Da der erste spannungsgesteuerte Oszillator als RC-Oszillator ausgebildet ist, ist er auch in einem größeren Bereich verstimmbar. Damit er aber nicht auf einer Frequenznebenlinie des Farbträgerspektrums einrastet, muß die Genauigkeit der Freilauffrequenz des ersten spannungsgesteuerten Oszillators für den Fall, daß der zweite spanungsgesteuerte Oszillator bereits auf der richtigen Frequenz schwingt, mindestens gleich dem Produkt des halben Abstandes zweier Frequenznebenlinien und dem Teilerfaktor des Frequenzteilers sein.

Sind Teile der beiden spannungsgesteuerten Oszillatoren auf einem gemeinsamen Halbleitersubstrat aufgebracht (integrierte Schaltung), so ergeben sich geringe Bauelementestreuungen der beiden spannungsgesteuerten Oszillatoren zueinander. Dadurch ist es möglich, für die beiden spannungsgesteuerten Oszillatoren einen gemeinsamen Ablgeich durchzuführen.

Es sei erwähnt, daß aus der US-PS 42 08 674 eine Schaltungsanordnung bekannt ist, bei der ebenfalls zwei Oszillatoren vorgesehen sind, die ein festes Frequenzverhältnis zueinander haben. Dadurch, daß in der Schaltungsanordnung gemäß der Erfindung die Ausgänge der beiden spannungsgesteuerten Oszillatoren mit Eingängen eines zweiten vor dem Frequenzteiler angeordneten Mischers gekoppelt sind, ist eine Schaltungsanordnung enthalten, die zuverlässiger ist als die aus der US-PS 42 08 674 bekannte Schaltung.

Es wird darüber hinaus erreicht, daß der Unterschied zwischen der Freilauffrequenz des ersten spannungsgesteuerten Oszillators und der Frequenz des sich im geregelten Zustand befindenden zweiten spannungsgesteuerten Oszillators größer sein kann. Die Funktionsgenauigkeit der Schaltungsanordnung wird dadurch nicht beeinträchtigt. Das bedeutet wieder, daß Bauelemente mit größeren Toleranzen bei der Herstellung der Schaltungsanordnung erlaubt sind.

Da das Mischsignal, das aus den Ausgangssignalen der beiden spannungsgesteuerten Oszillatoren gebildet wird, einen niederfrequenten und einen höherfrequenten Signalanteil enthält, ist vorgesehen, daß zwischen dem zweiten Mischer und dem Frequenzteiler ein Hochpaß zur Unterdrückung des niederfrequenten Mischproduktes angeordnet ist.

Bei der Modulation des Farbartsignals vom ersten auf den zweiten Träger ergeben sich ein niederfrequentes und ein höherfrequentes Modulationsprodukt. Daher ist vorgesehen, daß hinter dem Modulator ein erster Bandpaß zur Unterdrückung des höherfrequenten Modulationsproduktes angeordnet ist.

In einer Weiterbildung der Erfindung ist vorgesehen, daß zur Wiederherstellung der Originalphasenlage des zweiten Trägers eine Phasenfortschaltung zwischen Frequenzteiler und erstem Mischer angeordnet ist, in dem die bei der Aufzeichnung beim ersten Träger vorgenommene Phasenveränderung rückgängig gemacht wird und daß ein Kammfilter hinter dem ersten Bandpaß zur Unterdrückung der Übersprechstörungen angeordnet ist. Bei der Aufzeichnung werden die Farbartsignale bestimmter Zeilen eines Halbbildes um einen konstanten Betrag in der Phase verschoben. Bei der Wiedergabe wird diese Phasenveränderung wieder rückgängig gemacht und damit auch gleichzeitig die Anteile der von den Nebenspuren hervorgerufenen Übersprechstörungen in der Phase verändert. In dem Kammfilter werden die Übersprechstörungen dann unterdrückt.

In einem Fernsehsignal nach der PAL-Norm wird von Zeile zu Zeile der Farbträger und damit auch das Farbsynchronsignal in seiner Phase um 90° umgeschaltet. Bei einer Wiedergabe vom Videorecorder kann eine fehlerhafte Umschaltphasenlage vorliegen (z.B. Bildbetrachtung bei schnellem Vorlauf), d.h. von einer Zeile zur nächsten ist keine Umschaltung des Farbsynchronsignals vorgekommen. Um eine falsche Umschaltphasenlage zu korrigieren, ist vorgesehen, daß der erste Mischer über einen zweiten den niederfrequenten Signalanteil unterdrückenden Bandpaß mit dem ersten Eingang und über einen dritten den höherfrequenten Signalanteil unterdrückenden Bandpaß mit dem zweiten Eingang eines Umschalters gekoppelt ist und die Ausgangssignale der Bandpässe als dritter Träger über einen Umschalter dem Modulator zugeführt werden, daß ein Detektor entsprechend dem Phasenvergleich zwischen dem Oszillatorsignal des Referenzoszillators und dem Farbsynchronsignal den Umschalter zur Erzeugung der richtigen Umschaltphasenlage des zweiten Trägers steuert und daß eines der der ersten Phasenvergleichsschaltung zugeführten Signale invertiert wird, wenn das Ausgangssignal des dritten Bandpasses dem Modulator zugeführt wird.

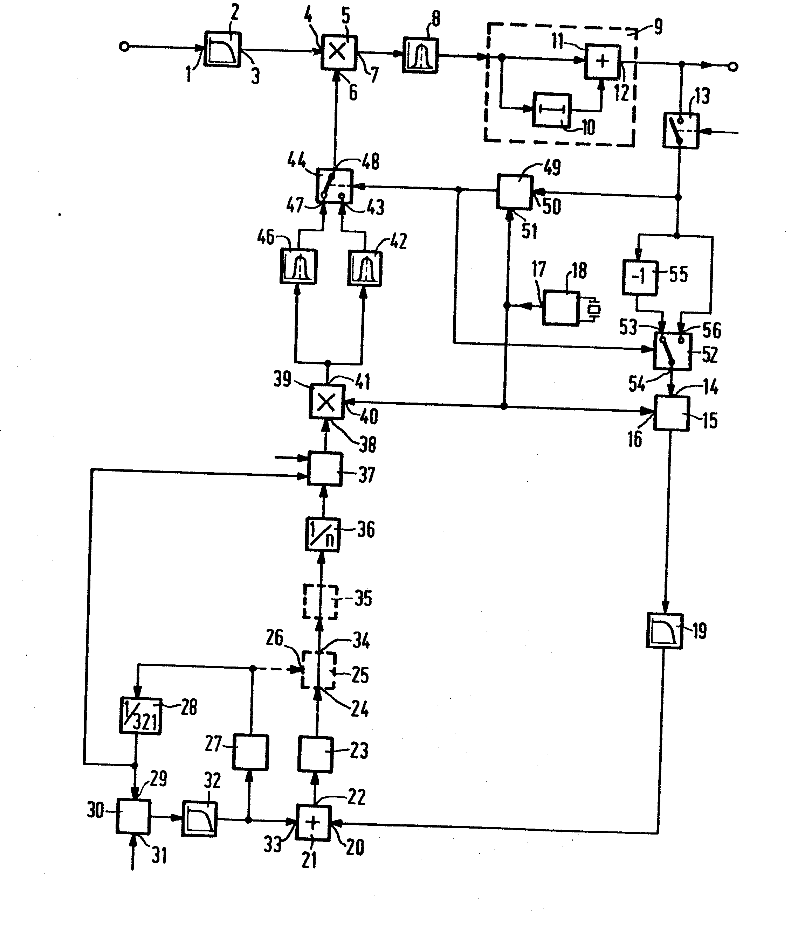

Anhand der Zeichnung wird im folgenden ein Ausführungsbeispiel der Erfindung beschrieben.

Dem Eingang 1 eines Tiefpasses 2 mit einer Grenzfrequenz von 1,1 MHz wird ein über die Videoköpfe wiedergegebenes PAL-codiertes Videosignal zugeführt. Am Ausgang 3 des Tiefpaßes 2 liegt ein vom Helligkeitssignal befreites Farbartsignal vor. Der Ausgang 3 des Tiefpaßes 2 ist mit einem Eingang 4 eines Modulators 5 verbunden. Im Modulator 5 wird das Farbartsignal von einem ersten Träger mit der Frequenz von 627 kHz auf einen zweiten Träger mit der Frequenz von 4,43 MHz moduliert. Für diesen Umsetzungsprozeß wird einem zweiten Eingang 6 des Modulators 5 ein dritter Träger zugeführt. Das am Ausgang 7 des Modulators 5 liegende Modulationsprodukt enthält das um den Träger mit einer Frequenz von 4,43 MHz liegende Farbartsignal und einen höherfrequenten Signalanteil, der im nachgeschalteten Bandpaß 8 mit einer Mittenfrequenz von 4,43 MHz unterdrückt wird. Hinter dem Bandpaß 8 ist ein Kammfilter 9 angeordnet, das eine Verzögerungsstufe 10 und einen Addierer 11 umfaßt. Das Eingangssignal des Kammfilters 9 wird einerseits direkt dem Addierer 11 und andererseits über eine Verzögerungsstufe, die das Signal um zwei Zeilen verzögert, zugeführt. Im Kammfilter 9 werden die Übersprechstörungen, wie das aus der DE-AS 26 46 806 bekannt ist, unterdrückt, und am Ausgang 12 des Kammfilters 9 liegt ein von Übersprechstörungen befreites moduliertes Farbartsignal vor.

Der Ausgang 12 des Kammfilters 9, der auch der Ausgang des Addierers 11 ist, ist mit einem Schalter 13 verbunden. Der Schalter 13 ist während der Farbsynchronaustastzeit geschlossen, d.h. während der Zeit, in der das Farbsynchronsignal vorliegt. Der Ausgang des Schalters 13 ist einerseits mit einem Invertierer 55 und andererseits mit dem ersten Eingang 56 eines Umschalters 52 verbunden. Das Ausgangssignal des Invertierers 55 wird dem zweiten Eingang 53 des Umschalters 52 zugeleitet. Der Ausgang 54 des Umschalters 52 ist mit dem Eingang 14 einer ersten Phasenvergleichsschaltung 15 verbunden. Des weiteren wird dem Umschalter 54 noch ein Umschaltsignal zugeführt. Einem anderen Eingang 16 der ersten Phasenvergleichsschaltung 15 wird ein Oszillatorsignal vom Ausgang 17 eines Referenzoszillators 18 zugeführt. Der Referenzoszillator 18 erzeugt ein quarzstabiles Oszillatorsignal mit der Frequenz von 4,43 MHz. Die Phasenvergleichsschaltung 15 speichert das Steuersignal und gibt während der Zeit, in der kein Farbsynchronsignal vorliegt, ein konstantes Steuersignal ab.

Das Ausgangssignal der ersten Phasenvergleichsschaltung 15 wird über ein Tiefpaßfilter 19, das den höherfrequenten Signalanteil unterdrückt, einem ersten Eingang 20 eines Addierers 21 zugeführt. Der Ausgang 22 des Addierers 21 ist mit einem ersten spannungsgesteuerten Oszillator 23 verbunden. Der Oszillator 23 ist als RC-Oszillator ausgebildet und erzeugt ein Ozsillatorsignal mit einer Freilauffrequenz von ca. 5,016 MHz, die einem Frequenzteiler 36 zugeführt wird. Der Frequenzteiler 36 hat einen Teilerfaktor von 8.

Ein zweiter spannungsgesteuerter RC-Oszillator 27 erzeugt ein Oszillatorsignal mit einer Freilauffrequenz von ca. 5,016 MHz. Das Oszillatorsignal wird über einen Frequenzteiler 28 auf einen ersten Eingang 29 einer zweiten Phasenvergleichsschaltung 30 gegeben. Der Frequenzteiler 28 besitzt einen Teilerfaktor von 321, d.h. er teilt die Frequenz des Oszillatorsignals des Oszillators 27 durch 321. Einem zweiten Eingang 31 der Phasenvergleichsschaltung 30 werden die aus dem wiedergegebenen Videosignal abgetrennten Zeilensynchronimpulse zugeführt und in der Phasenvergleichsschaltung in der Frequenz und Phase mit dem frequenzgeteilten Oszillatorsignal des Oszillators 27 verglichen. Das Ausgangssignal der Phasenvergleichsschaltung 30 wird über einen Tiefpaß einerseits einem Eingang 33 des Addierers 21 und andererseits dem zweiten spannungsgesteuerten Oszillator 27 zugeführt.

Das Ausgangssignal des Frequenzteilers 36 wird auf eine Phasenfortschaltung 37 gegeben. Der Phasenfortschaltung 37 wird außerdem noch das zeilenfrequente Ausgangssignal des Frequenzteilers 28 und die Kopfkennimpulse zugeführt. Die Kopfkennimpulse geben jeweils den Wechsel zwischen den Videoköpfen an. Die Phasenfortschaltung 37 ist z.B. in der DE-AS 26 46 806 näher beschrieben. In ihr wird die Phase des Ausgangssignals des Frequenzteilers 36 während einer Zeile um einen konstanten Betrag verändert. So wird z.B. während eines Halbbildes von Zeile zu Zeile die Phase um 90° verändert, so daß während jeder vierten Zeile die gleiche Phasenlage vorliegt, und während des nächsten Halbbildes die Phase unverändert gelassen.

Das frequenzgeteilte und in der Phase teilweise veränderte Ausgangssignal der Phasenfortschaltung 37 mit einer Frequenz von 627 kHz wird einem ersten Eingang 38 eines Mischers 39 zugeführt. Der zweite Eingang 40 des Mischers 39 ist mit dem Ausgang 17 des Referenzoszillators 18 verbunden. Am Ausgang 41 des Mischers 39 liegt ein Mischsignal mit den beiden Frequenzanteilen von 5,06 MHz und 3,8 MHz vor. Dieses Mischsignal wird einerseits über einen Bandpaß 42, der den niederfrequenten Signalanteil unterdrückt, auf einen ersten Eingang 43 eines Umschalters 44 gegeben und andererseits über einen Bandpaß 46, der den höherfrequenten Signalanteil des Mischsignals ausfiltert, auf einen zweiten Eingang 47 des Umschalters 44 gegeben. Der Ausgang 48 des Umschalters 44 ist mit dem Eingang 6 des Modulators 5 verbunden. Im Umschalter 44 ist entweder der Eingang 43 oder der Eingang 47 mit dem Ausgang 48 verbunden. Gesteuert wird der Umschalter 44 von einem Detektor 49, dem das Ausgangssignal des Kammfilters 12 über den Schalter 13 einen ersten Eingang 50 und das erste Oszillatorsignal des Referenzoszillators 18 einem zweiten Eingang 51 zugeführt wird. Außerdem erzeugt der Detektor 49 auch das Umschaltsignal für den Umschalter 52.

Die Funktion der Schaltungen 42, 44, 46, 49, 52 und 55 wird ausführlich in der deutschen Patentschrift 24 33 330 beschrieben. Liegt eine falsche Umschaltphasenlage des Farbträgers und damit des Farbsynchronsignals im Videosignal vor, d.h. hat das Farbsynchronsignal keine Phasenänderung von 90° während aufeinanderfolgender Zeilen erfahren, detektiert das der Detektor 49 und schaltet den Umschalter 44 und den Umschalter 52 um. Ist der Ausgang 48 des Umschalters 44 mit dem Eingang 47 verbunden, besteht auch eine Verbindung zwischen dem Ausgang 54 des Umschalters 52 und dem Eingang 53. Diese Schalterstellung wird eingehalten,bis der Detektor 49 die nächste fehlerhafte Umschaltphasenlage entdeckt. Die beiden Umschalter 44 und 52 schalten dann wieder um. Aus den beiden Ausgangssignalen der Bandpässe 42 oder 46 wird im Modulator 5 das Farbträgersignal von 4,43 MHz mit korrekter Umschaltphasenlage des Farbträgers gebildet. Es kann auch das der Phasenvergleichsschaltung 15 zugeführte erste Oszillatorsignal des Referenzoszillators 18 über die aus dem Invertierer 55 und dem Umschalter 55 gebildete Anordnung geleitet werden. In diesem Fall ist der Ausgang des Schalters 13 direkt mit dem Eingang 14 der Phasenvergleichsschaltung verbunden.

Im folgenden wird nun die Funktion der Schaltungsanordnung erläutert. Der zweite spannungsgesteuerte Oszillator 27 wird exakt auf das 321-fache der Zeilenfrequenz geregelt. Der erste spannungsgesteuerte Oszillator 23 hat auf Grund von Bauelementestreuungen eine nur wenig abweichende Frequenz vom spannungsgesteuerten Oszillator 27. Durch die Steuerspannung der Phasenvergleichsschaltung 30 wird der erste spannungsgesteuerte Oszillator 23 in die Nähe der Frequenz des zweiten spannungsgesteuerten Oszillators 27 gezogen. Die Frequenz und die Phase des ersten spannungsgesteuerten Oszillators 23 wird endgültig durch ein Steuersignal der ersten Phasenvergleichsschaltung 15 festgelegt, die während der Farbsynchronaustastzeit die Frequenz und Phase des ersten Oszillatorsignals mit dem Farbsynchronsignal vergleicht und die Spannung während der restlichen Zeile konstant hält. Aus dem Ausgangssignal des spannungsgesteuerten Oszillators 23 wird nach der Frequenzteilung im Frequenzteiler 36 und einer eventuellen Phasenänderung in der Phasenfortschaltung 37 das 627 kHz Signal erzeugt.

Am Ausgang 12 des Kammfilters 9 liegt das Farbartsignal, bestehend aus Farbsynchronsignal und moduliertem Farbsignal, vor. Der Farbträger hat bedingt durch die Zeilenfrequenz und durch die Umschaltphasenfolge des Farbträgers Frequenznebenlinien im Abstand von 7,8 kHz. Bei einer Realisierung der Schaltungsanordnung als integrierte Schaltung weichen die Freilauffrequenzen der beiden spannungsgesteuerten Oszillatoren 23 und 27 auf Grund von Bauelementestreuungen nur wenig voneinander ab. Damit kein Einrasten auf einer Frequenznebenlinie erfolgt, ist für den ersten spannungsgesteuerten Oszillator 23 nur eine bestimmte Ablage von der Sollfrequenz zulässig. Durch den Frequenzteiler 36 wird nicht nur die Frequenz des Ausgangssignals des Oszillators 23 geteilt, sondern auch die zulässige Ablage von der Sollfrequenz vergrößert. Da ein Einrasten auf einer Frequenznebenlinie nur verhindert wird, wenn die Frequenzablage nach dem Frequenzteiler 36 nur ein Viertel der Zeilenfrequenz (± 3,9 kHz) beträgt. Damit beträgt die zulässige Frequenzablage des Oszillators 23 bei einem Teilerfaktor von 8 des Frequenzteilers 36 jeweils das doppelte der Zeilenfrequenz (± 31,2 kHz). Es hat sich in der Praxis gezeigt, daß die Oszillatoren 23 und 27 so gebaut werden können, daß die Differenz ihrer Freilauffrequenzen nicht größer ist.

Da die beiden spannungsgesteuerten Oszillatoren 23 und 27 ungefähr mit derselben Frequenz schwingen und beide auf einem gemeinsamen Halbleitersubstrat aufgebracht sind, ist auch nur ein gemeinsamer Abgleich für die beiden Oszillatoren 23 und 27 erforderlich.

Durch eine weitere Maßnahme läßt sich die zulässige Frequenzablage des Oszillators 23 und den Faktor 2 erhöhen. Dazu wird zwischen Oszillator 23 und Frequenzteiler 36 ein zweiter Mischer 25 und ein Hochpaß 35 gesetzt. Das Ausgangssignal des Oszillators 23 wird einem ersten Eingang 24 des Mischers 25 und das Ausgangssignal des Oszillators 27 nicht nur dem Frequenzteiler 28 sondern auch einem zweiten Eingang 26 des Mischers 25 zugeführt. Das Mischsignal am Ausgang 34 des zweiten Mischers 25 enthält einen höherfrequenten Signalanteil von ca. 10,032 MHz und einem niederfrequenten Signalanteil, der im nachgeschalteten Hochpaß 35 unterdrückt wird. Das Ausgangssignal des Hochpasses 35 wird dem Frequenzteiler 36 zugeführt, dessen Teilerfaktor nun den Betrag 16 hat. Da der zweite spannungsgesteuerte Oszillator 27 exakt auf einem Vielfachen der Zeilenfrequenz schwingt und dem Frequenzteiler 36 ein Signal mit der doppelten Frequenz gegenüber der oben genannten Ausführungsform zugeführt wird, ist auch die zulässige Frequenzablage des Oszillators 23 um den Faktor 2 erhöht worden.

Die Funktion des aus dem spannungsgesteuerten Oszillator 27, des Frequenzteilers 28, der Phasenvergleichsschaltung 30 und des Tiefpasses 32 gebildeten Phasenregelkreises ist auch wie bekannt Geschwindigkeitsänderungen, die sich als Frequenzänderungen bemerkbar machen, zu eliminieren. Die Frequenzänderungen sind gleichzeitig im Farbsynchronsignal und Zeilensynchronimpuls vorhanden, so daß sie sich bei der Mischung gegenseitig aufheben.

Bei der Aufzeichnung wurde die Phase des 627 kHz-Trägers teilweise um einen konstanten Betrag in einer Zeile verschoben. Die Phasenfortschaltung 37 verändert die Phase des vom Mischer 25 stammenden Mischsignals so, daß bei der Modulation die Phasenveränderung des Trägers wieder korrigiert wird. Da bei der Wiedergabe auch Übersprechstörungen von den Nebenspuren im Farbartsignal vorhanden sind, werden diese in ihrer Phase auch verändert und schließlich im Kammfilter 9 unterdrückt.

## PATENTANSPRÜCHE

1.    Schaltungsanordnung für eine Videorecorder mit einem Modulator (5) zur Modulation eines Farbartsignals von einem ersten auf einen zweiten Träger mittels eines dritten Trägers, mit einem ersten Phasenregelkreis, in dem eine erste Phasenvergleichsschaltung (15) entsprechend dem Phasenvergleich zwischen dem Farbsynchronsignal und einem in einem Referenzoszillator (18) erzeugten Oszillatorsignal einen ersten spannungsgesteuerten Oszillator (23) steuert, der mit dem Eingang (38) eines den dritten Träger liefernden ersten Mischer (39) gekoppelt ist, und mit einem zweiten Phasenregelkreis, der einen zweiten spannungsgesteuerten Oszillator (27) und eine zweite Phasenvergleichsschaltung (30) umfaßt, zur Synchronisation des im zweiten spannungsgesteuerten Oszillator (27) erzeugten frequenzgeteilten Oszillatorsignals mit den wiedergewonnenen Zeilensynchronimpulsen, dadurch gekennzeichnet, daß die beiden spannungsgesteuerten Oszillatoren (23, 27) ein festes Frequenzverhältnis zueinander haben, daß der erste spannungsgesteuerte Oszillator (23) als Steuergröße die Summe der Ausgangssignale der Phasenvergleichsschaltungen (15, 30) erhält, daß der erste spannungsgesteuerte Oszillator (23) über einen Frequenzteiler (36) mit dem ersten Mischer (39) und der Referenzoszillator (18) mit dem anderen Eingang (40) des ersten Mischers (39) gekoppelt ist und daß die Ausgänge der beiden spannungsgesteuerten Oszillatoren (23, 27) mit Eingängen eines zweiten vor dem Frequenzteiler angeordneten Mischers (25) gekoppelt sind.

30

2.    Schaltungsanordnung für einen Videorecorder nach Anspruch 1, dadurch gekennzeichnet, daß Teile der beiden spannungsgesteuerten Oszillatoren (23, 27) auf einem gemeinsamen Halbleitersubstrat aufgebracht sind.

3.    Schaltungsanordnung für einen Videorecorder nach Anspruch nach einem der vorhergehenden Ansprüche, dadurch gekennzeichnet, daß zwischen dem zweiten Mischer (25) und dem Frequenzteiler (36) ein Hochpaß (35) zur Unterdrückung des niederfrequenten Mischproduktes angeordnet ist.

4.    Schaltungsanordnung für einen Videorecorder nach einem der vorhergehenden Ansprüche, dadurch gekennzeichnet, daß hinter dem Modulator (5) ein erster Bandpaß (8) zur Unterdrückung des höherfrequenten Modulationsproduktes angeordnet ist.

5.    Schaltungsanordnung für einen Videorecorder nach Anspruch 4, dadurch gekennzeichnet, daß zur Wiederherstellung der Originalphasenlage des zweiten Trägers eine Phasenfortschaltung (37) zwischen Frequenzteiler (36) und erstem Mischer (39) angeordnet ist, zum Rückgängigmachen der bei der Aufzeichnung beim ersten Träger vorgenommene Phasenveränderung, und daß ein Kammfilter (9) hinter dem ersten Bandpaß (8) zur Unterdrückung der Übersprechstörungen angeordnet ist.

6.      Schaltungsanordnung für einen Videorecorder nach der PAL-Norm nach einem der vorhergehenden Ansprüche <u>dadurch gekennzeichnet</u>, daß der erste Mischer (39) über einen zweiten den niederfrequenten Signalanteil unterdrückenden Bandpaß (42) mit dem ersten Eingang (43) und und über einen dritten den höherfrequenten Signalanteil unterdrückenden Bandpaß (46) mit dem zweiten Eingang (47) eines Umschalters (44) gekoppelt ist und die Ausgänge der Bandpässe (42, 46) über einen Umschalter (44) mit dem Modulator (5) gekoppelt sind, daß ein Detektor (49) entsprechend dem Phasenvergleich zwischen dem Oszillatorsignal des Referenzoszillators (18) und dem Farbsynchronsignal den Umschalter (44) zur Erzeugung der richtigen Umschaltphasenlage des zweiten Trägers steuert und daß eines der der ersten Phasenvergleichsschaltung (15) zugeführten Signale invertiert wird, wenn das Ausgangssignal des dritten Bandpasses (46) dem Modulator (5) zugeführt wird.

0208351

PHD 85-080

**Europäisches Patentamt**

## EUROPÄISCHER RECHERCHENBERICHT

| Kategorie | EINSCHLÄGIGE DOKUMENTE | | EP 86200981.8 |
|---|---|---|---|
| | Kennzeichnung des Dokuments mit Angabe, soweit erforderlich, der maßgeblichen Teile | Betrifft Anspruch | KLASSIFIKATION DER ANMELDUNG (Int Cl 4) |
| A | DE - A1 - 3 204 083 (VICTOR)<br>* Fig. 1; Seite 8, Zeile 9 - Seite 12, Zeile 5 *<br>-- | 1 | H 04 N 9/83<br>H 04 N 9/89 |
| A | US - A - 4 405 937 (KUDO et al.)<br>* Fig. 1,2; Zusammenfassung *<br>-- | 1 | |
| A | DD - A - 205 799 (VEB ZENTRUM)<br>* Fig. 2,3; Seite 4, Zeile 6 - Seite 6, Zeile 7 *<br>-- | 1 | |
| A | DE - A1 - 2 711 263 (SONY)<br>* Fig. 3; Seite 23, Zeile 23 - Seite 29, Zeile 29 *<br>---- | 1 | |

| | RECHERCHIERTE SACHGEBIETE (int. Cl.4) |
|---|---|
| | H 04 N 5/00<br>H 04 N 9/00 |

Der vorliegende Recherchenbericht wurde für alle Patentansprüche erstellt.

| Recherchenort | Abschlußdatum der Recherche | Prüfer |
|---|---|---|
| WIEN | 10-09-1986 | DIMITROW |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82